# EUROPEAN PATENT SPECIFICATION

(11) **EP 0 592 942 B1**
(45) Date of publication and mention of the grant of the patent: **25.03.1998**
(21) Application number: 93116210.1
(22) Date of filing: 07.10.1993
(51) Int. Cl.: C08L 77/00, C08K 7/14, C08K 3/02

(54) **Flame retardant polyamide composition**
Flammhemmende Polyamid-Zusammensetzung
Composition de polyamide ignifugée

(30) Priority: 12.10.1992 JP 299312/92; 12.10.1992 JP 299357/92
(43) Date of publication of application: 20.04.1994
(73) Proprietor: KISHIMOTO SANGYO CO., LTD., Osaka-shi, Osaka (JP)
(72) Inventor: Moriwaki, Takeshi, Kishimoto Sangyo Co., Ltd., Osaka-shi, Osaka (JP)
(74) Representative: Türk, Gille, Hrabal, Leifert

(56) References cited:
- EP-A- 0 070 001
- EP-A- 0 345 486
- DE-A- 1 931 387
- DE-A- 3 200 428
- DE-A- 3 844 224
- US-A- 4 410 661
- US-A- 5 071 894
- PATENT ABSTRACTS OF JAPAN vol. 016, no. 183 (C-0936)6 May 1992 & JP-A-04 023 863 (KISHIMOTO SANGYO) 28 January 1992
- PATENT ABSTRACTS OF JAPAN vol. 013, no. 069 (C-569)16 February 1989 & JP-A-63 258 952 (KISHIMOTO SANGYO) 26 October 1988

## Description

### Background of the Invention

### Field of the Invention

This invention relates to a polyamide having superior flame retardancy. More precisely, this invention relates to a crystalline linear aliphatic polyamide having non-dripping flame retardancy without the use of halogenated flame retardants.

### Prior art

Polyamide resins are widely used in mechanical parts, automobile parts, and electric parts, because it possesses good mechanical properties, chemical resistance, and durability. However, since polyamide do not have sufficient properties in terms of flame retardancy, it is limited to structural parts and is hard to be employed for insulating parts or enclosures for electric use.

The reason is, since it is subjected to the vertical burning test specified by UL Standard No. 94, the temperature of the test specimens of crystalline polyamide having relatively lower melting point, such as nylon 6, nylon 12, and nylon 11 etc., rises to its melting point within a short time by the application of the burner flame, then draw down by the self weight of the specimen to make a new surface that contact to the flame and transmit much more heat from the flame to the resin. Thus the decomposition and the formation of flammable products is accelerated and finally flaming specimens drops to burn the surgical cotton placed 300 mm under the specimen. (Hereinafter called a flame dripping). Thus, it cannot meet the UL94V-0 flame class which is essential for the material to be used for live parts of electric equipments. This phenomena is more evident in the composite filled with high density fillers.

Therefore, nylons having non-dripping flame resistance is practically limited to higher melting point nylons such as nylon 66, nylon 6T, nylon 46, and nylon MXD6, and crystalline nylons for relatively lower melting point such as nylon 6, nylon 12, nylon 11 are hardly successful to obtain non-dripping flame resistance. But since such high melting point non-dripping nylons have poor processability, and generally have poor ductility, the development of non-dripping flame resistant grade of low melting point nylon resins having good processability are strongly required by the industries.

JP-A-04 023 863 corresponding to PATENT ABSTRACTS OF JAPAN, vol, 016, no. 183 (C-0936) discloses a reinforced polyamide resin composition comprising a mixture of an aliphatic polyamide resin, a semi-aromatic amorphous polyamide resin and glass fibers.

EP-A-0 345 486 discloses thermoplastic compositions of amorphous semi-aromatic copolyamide resins, thermoplastic semi-crystalline polyamides and optionally rubbery polymers.

US-A-4,410,661 discloses blends of thermoplastic polyamides comprising thermoplastic semi-crystalline polyamides and thermoplastic amorphous polyamides.

### Summary of the Invention

The inventor has concentrated to develop a low melting point polyamide composition of superior processability characterized in having non-dripping flame resistance, surpassing the limits of the prior art, and finally developed the composition and completed this invention.

### Detailed Description of the Invention

The constitutions of the flame retardant polyamide composition of the present invention are as defined in claim 1.

Red phosphorus is extremely effective as flame retardant, and one or more than two selected from the group of iron powder, iron oxide powder, ferrite, magnetite are used as high density filler. In addition, glassy powder comprising 80 % or more of lead oxide (PbO) provides good effect.

In general, halogenated organic compounds, phosphate esters, inorganic compounds that release water or carbon dioxide gas at elevated temperature are proposed for flame-retarding chemicals. But, since halogenated organic compounds are generally unstable to heat and decomposes to generate irritating gas during molding process and corrode molding machine or mould and also pollute the working environment, and some kind of halogenated flame retardants generate decomposition gasses containing dioxines by the incineration of waste molding parts, which is now becoming a serious pollution problem.

Inorganic flame retardants require high addition levels in the polymer system in order to provide desired flame resistance, which reduces the physical properties and the processability of the composite. The reduction of processability is a vital defect when the flame retardant compound is used for high precision thin-wall molding parts.

Recently, attention is riveted to element phosphorus, especially red phosphorus, as flame retardant free of such defects. Said red phosphorus is a powder of average diameter of 2-50 µ. For the easy of compounding operation, the surface of red phosphorus may be coated with resins to protect water absorption in order to prevent the generation of toxic phosphine gas, and these kind of red phosphorus is also included.

These red phosphorus flame retardant had previously known to exhibit flame resistance by the addition of relatively low addition levels in the resin such as 5-10 %. The flame retarding mechanism of red phosphorus is recognized as, that the red phosphorus in the composition burns at first by the application of flame, then the resulting carbonized product and condensed phosphoric acid covers the plastic surface, and retard the burning of the plastic.

Therefore, at the moment of the flame application the temperature of plastic rises by the burning of red phosphorus, and when the temperature reaches the melting point of the resin the hot resin drops to ignite the cotton, thus do not comply with UL 94V-0 standard. This phenomenon is evident for crystalline plastic having relatively low melting point. This phenomenon is tends to be improved by the incorporation of glass fibers in the resin, but since nylon 6 has relatively low melting point it had hardly been succeeded to provide non-dripping flame resistance of UL 94V-0.

In order to improve such defect of prior art using red phosphorus flame retardant, the inventor intended to develop a new composition, by the addition of low levels of amorphous polyamide to a composition comprising 5-15 weight % of red phosphorus into aliphatic crystalline polyamide, in which glass fibers may be added when it is required, and thus succeeded to develop non-dripping flame resistance of UL 94V-0, and completed the present invention.

The semi-aromatic amorphous polyamide used in the present invention is polymeric material having molecular structure combining linear aliphatic hydrocarbon and aromatic hydrocarbon by amide linkage, and substantially transparent amorphous polyamide or copolyamide.

As a definite composition of such amorphous polyamide include, for example, co-polycondensation product of hexamethylene diamine as diamine and two components of terephthalic acid and isophthalic acid as the dibasic acid generally called as PA6T/6I, or four component co-polycondensation product such as hexamethylene diamine and diamino alicyclic compound such as bis-(4-amino-cyclohexyl)-methane as diamine and terephtalic acid and isophtalic acid as dibasic acid. The amorphous polyamide do not possesses melting point, and the glass transition temperature (Tg) lies between 120-180°C.

The effect of adding such amorphous polyamide in the flame retardant polyamide composition of the present invention is, as it becomes clear by the examples written later, extremely effective in preventing flame dripping of the test specimen subjected to vertical burning test even at relatively low addition levels. Namely, although red phosphorus flame retardant is effective for burning resistance of crystalline nylon 6, it has a defect that it cannot comply with UL 94V-0 since the specimen heated by the flame application cause flame dripping by its self weight and ignite the surgical cotton placed 300 mm under the lower end of the specimen. However, when amorphous polyamide is added to nylon 6 it increases the melt viscosity of the resin system, which is thought to prevent the flame dripping by self weight. This effect is especially evident for glass fiber filled system.

The reason is, that the adhesion of the blend system of nylon 6 and amorphous polyamide to glass fiber is better than that of nylon 6 resin alone, therefore it enhances the effect of glass fiber for preventing flame dripping.

The composition of the present invention is also related to high-density composition by high addition levels of high-density fillers, to be used for rotating inertial mass or damping body. For this object, iron powder such as atomized iron powder, ferrite, magnetite etc., can be added 200-400 parts by weight to 100 weight parts of resin to make composite having specific gravity of 3.0-4.5. For the products that the rusting is not allowed, glassy powder comprising 80 % or more of lead monoxide (PbO) of particle size under 150 mesh can be filled 500-700 weight parts to 100 weight parts of resin to produce composite having specific gravity of 2.7-4.0.

It is preferred to surface treat these high-density fillers by silane coupling agents prior to compounding, in order to improve the adhesion with resin and improve the melt flow and the dispersion of fillers. Although such high specific gravity composite is easily cause flame dripping at burning test since the self weight of the specimen is heavy, the flame class of UL 94V-0 can be acquired by the composition written above.

For the phenolic resin a phenolic resin prepolymer called novolak resin is preferred, which is made by the condensation reaction of phenol and formaldehyde at the presence of acidic catalyst and excess phenol condition. Another type of phenolic resin is the phenolic resin containing methylol group which is sold under the trade name of Bellpearl.

The mixing of such amorphous polyamide and phenolic resin to the flame retardant composition of the present invention, is effective for preventing flame dripping by the vertical burning test by relatively low addition levels, as it is illustrated by the examples of the invention written later. Namely, although the addition of red phosphorus to crystalline nylon 6 alone, it exhibits fire extinguishing effect but since the heated and softened test specimen drops by its self weight and ignite surgical cotton placed 300 mm under the specimen, thus fail to meet UL 94V-0. In contrary, when amorphous polyamide and phenolic resin is added, they increases the viscosity of the resin softened by the flame application, therefore they prevent the flame drop by self weight of the resin.

The composition exhibiting such effect is made by mixing 5-20 weight % of amorphous polyamide, 5-20 weight % of phenolic resin. If the ratio of amorphous polyamide is lower than these range, the flame dripping prevention is not effective, and if more higher levels of amorphous polyamide is added, the effect is saturated and defects such as decrease of flow of resin or the reduction of the surface appearance of the molded products occurs. If the ratio of phenolic resin is lower than these range, the flame dripping prevention is not effective and if more higher levels of phenolic resin is added, the toughness of the composite is reduced. This effect is especially remarkable at the glass fiber filled system. The reason is thought that the blend system of nylon 6, amorphous nylon and phenolic resin has better adhesion to glass fibers than that of nylon 6 alone, so it enhances the flame dripping preventing effect by glass fiber.

The polyamide composition of the present invention can employ additives of prior arts such as stabilizers, plasticizers, mold release agents, lubricants etc. In addition, known inorganic flame retardant of magnesium hydroxide may be added to 10-30 % (to nylon), to enhance flame retardancy. Blend oils may be added at the compounding process to prevent the separation of each component and improve the uniformity of the composite.

The production of the composite of the present invention is made by conventional process such as melt compounding of the dry blend of each component by single screw extruder, twin screw extruder or extruders equipped with special kneading mechanism. Glass fibers may be supplied by blending together with other components, but it is preferable to supply the blends of resin and flame retardants and other additives at the feed port of the extruder and feed glass fibers at the feed port installed at the down stream of the extruder to keep the glass fiber length in the product longer and to produce the composite having better physical properties.

The polyamide composition according to the present invention comprises 100 weight parts of the mixture of 95-70 weight % of aliphatic crystalline polyamide and 5-30 weight % of semi-aromatic amorphous polyamide, 5-20 weight parts of phenolic resin, 5-15 weight parts of red phosphorus flame retardant, 0-100 weight parts of glass fiber, 0-400 weight parts of high density fillers, which supply non-dripping flame retardant polyamide composition of UL 94V-O flame class having superior physical properties and processability, therefore the industrial value is extremely great.

### PREFERRED EMBODIMENT

The following examples illustrate the composition of the present invention.
1. Materials
   (1) Aliphatic crystalline polyamide (PA6)
      Grilon A28GM by EMS-CHEMIE AG.
   (2) Semi-aromatic crystalline polyamide (PA6I/6T)
      Grivory G21 by EMS-CHEMIE AG.
   (3) Red phosphorus
      (10 micron average particle size red phosphorus)
   (4) Glass fiber 3PE454 by Nitto Boseki Co., Ltd.
   (5) High density fillers
      A: 150 mesh passed powder of glassy lead oxide (specific gravity 6.5) comprising 85 % of lead oxide (PbO) and 15 % of silicic acid anhydride (SiO₂). Surface treated with 0.2 % of aminosilane coupling agent by conventional method.
      B: Atomized iron powder KIP 300A made by Kawasaki Steel Corp., surface treated with 0.2 % aminosilane coupling agent by conventional method.
      C: Ferrite powder FL 951A made by Toda Industrial Company, surface treated with 0.2 % aminosilane coupling agent by conventional method.
      D: Magnetite powder (average diameter 6 microns) made by Shin Nippon Steel Corp., surface treated with aminosilane with conventional method.
   (6) Phenolic resin
      A: Novolak type prepolymer
      B: Bellpearl R800 made by Kanebo Corp.
2. Compounding and moulding
   Each component written in Table 1 are mixed by drum blender, and extruded by 40 mm φ extruder at the cylinder temperature of 250°C to produce compound pellet. The pellet produced are injection molded by conventional injection molding machine (SN75A made by Niigata Engineering Company) to mold tensile test specimen specified by ASTM D638, and bar specimen of 12.6 mm width, 1.6 mm thickness, 126 mm length specified by ASTM D790, at cylinder temperature of 260°C and mold temperature of 70 °C.
3. Results

The composite referred to the present invention provides excellent flame retardant property of non-dripping without reducing physical properties and moldability, to relatively low melting point polyamides such as nylon 6, nylon 12, and nylon 11 etc., and also presents a new composite with no contamination of working environment or living environment that may be caused by prior arts of flame retardant technology.

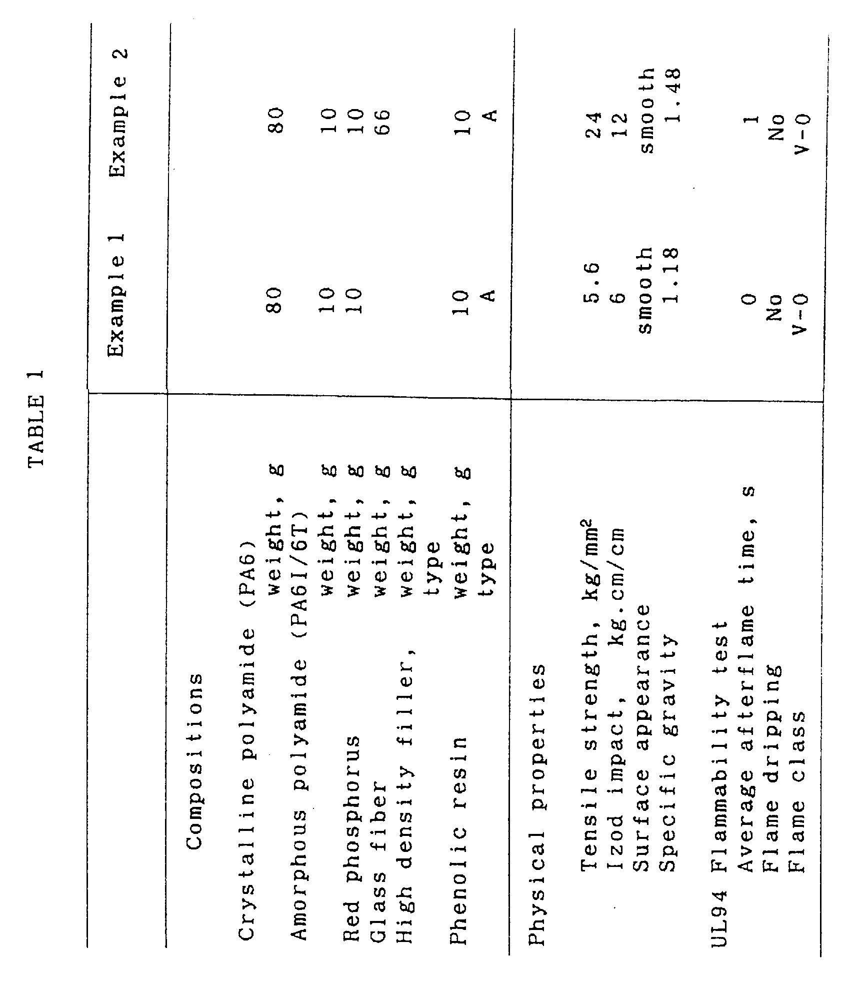

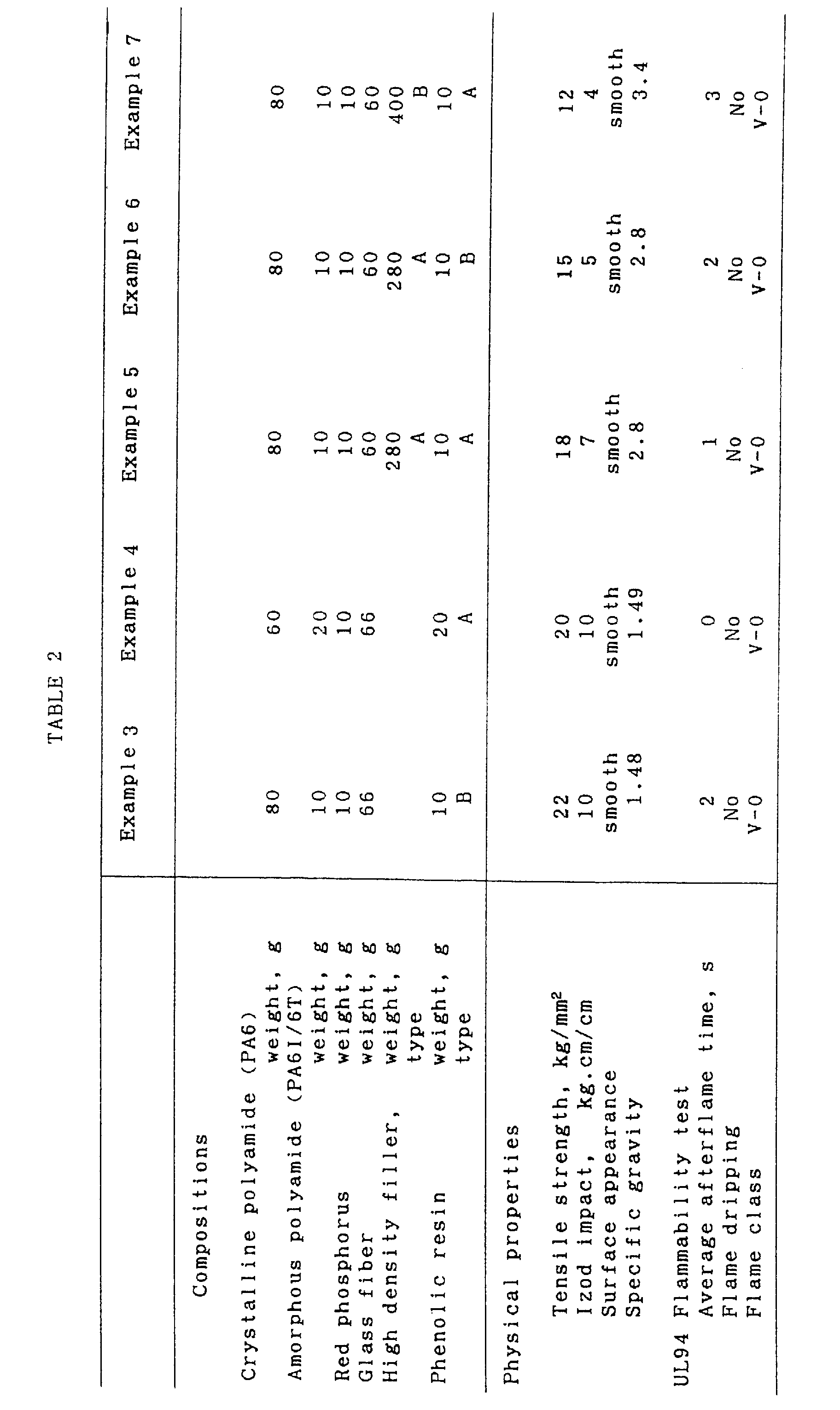

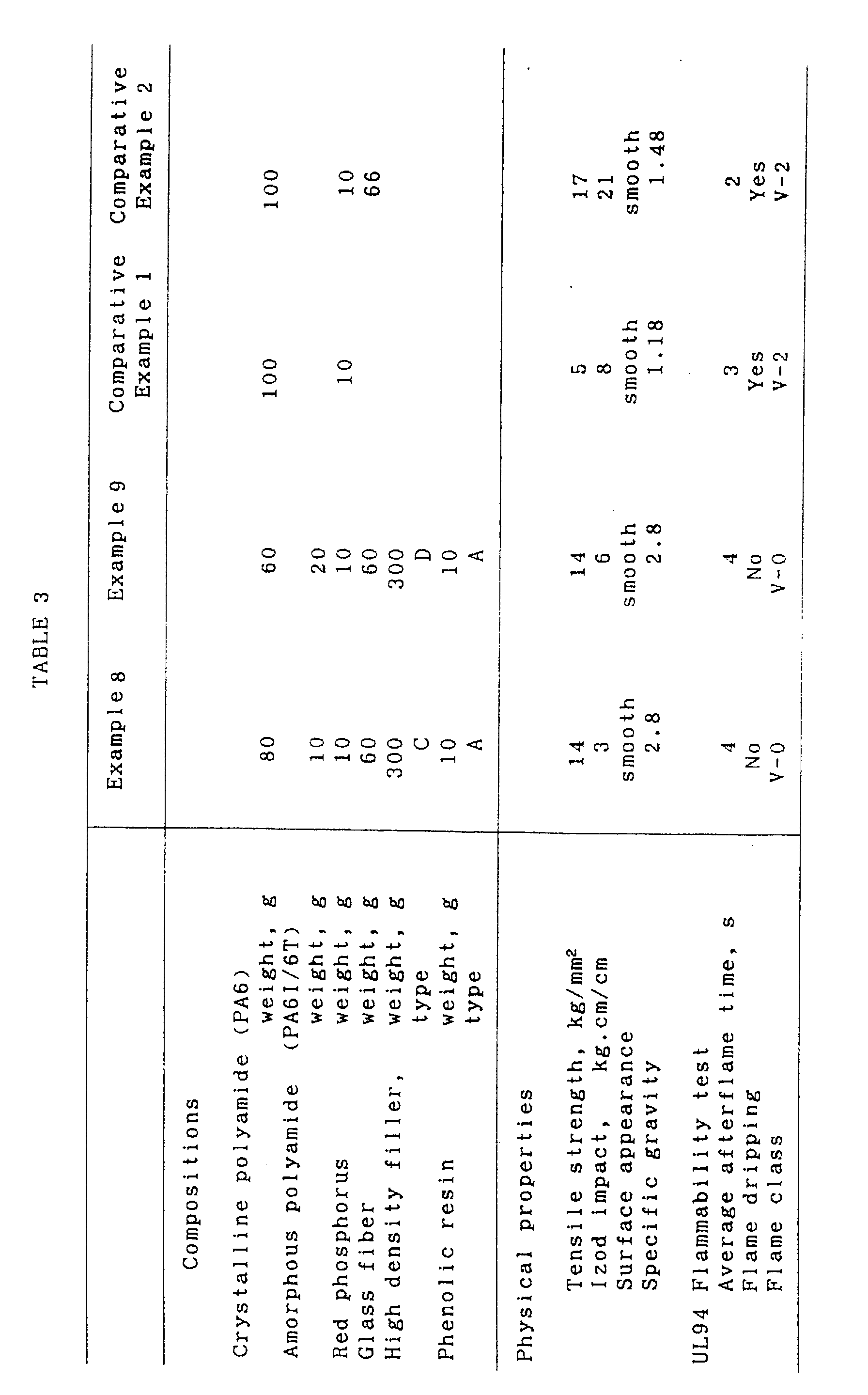

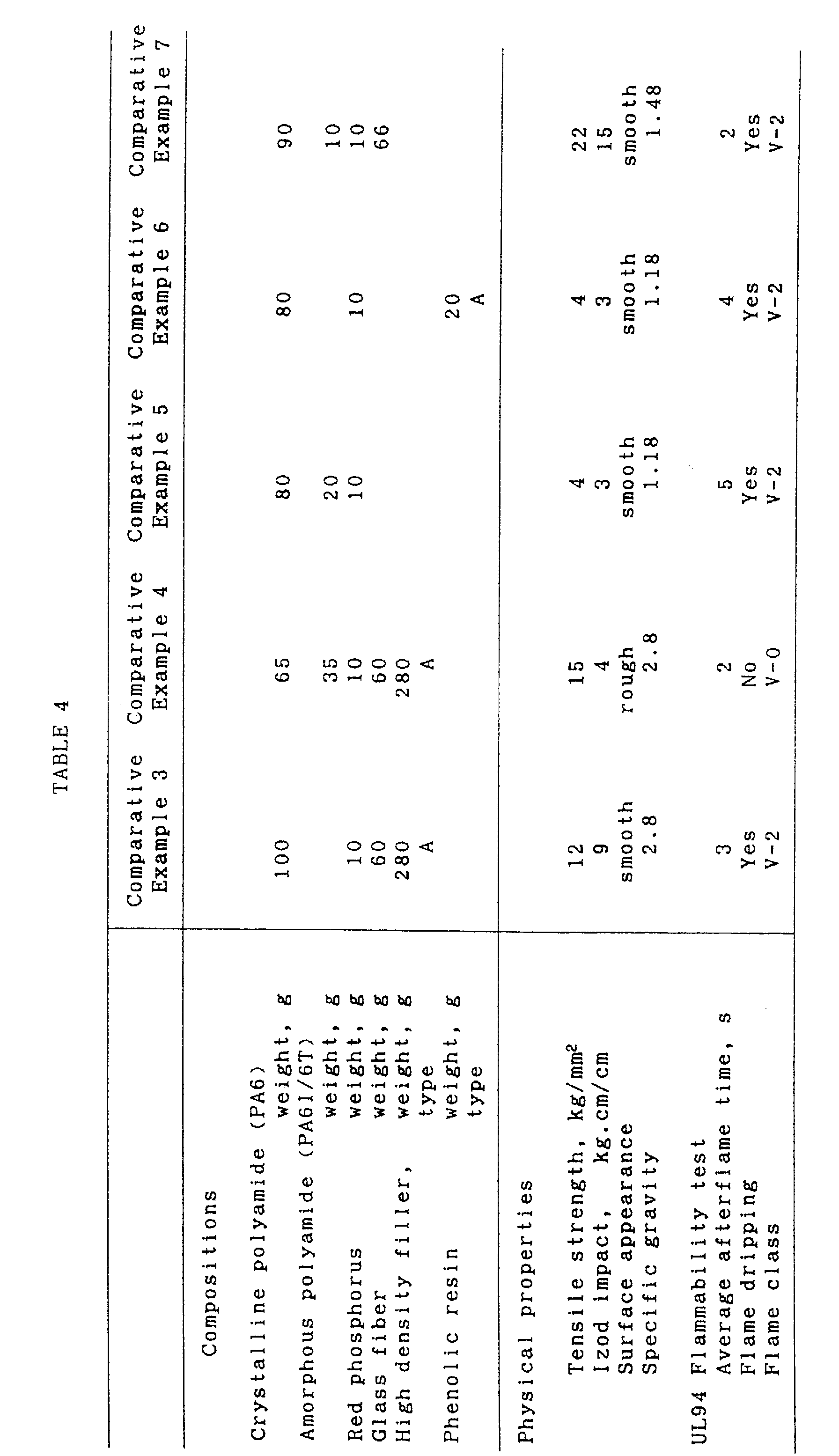

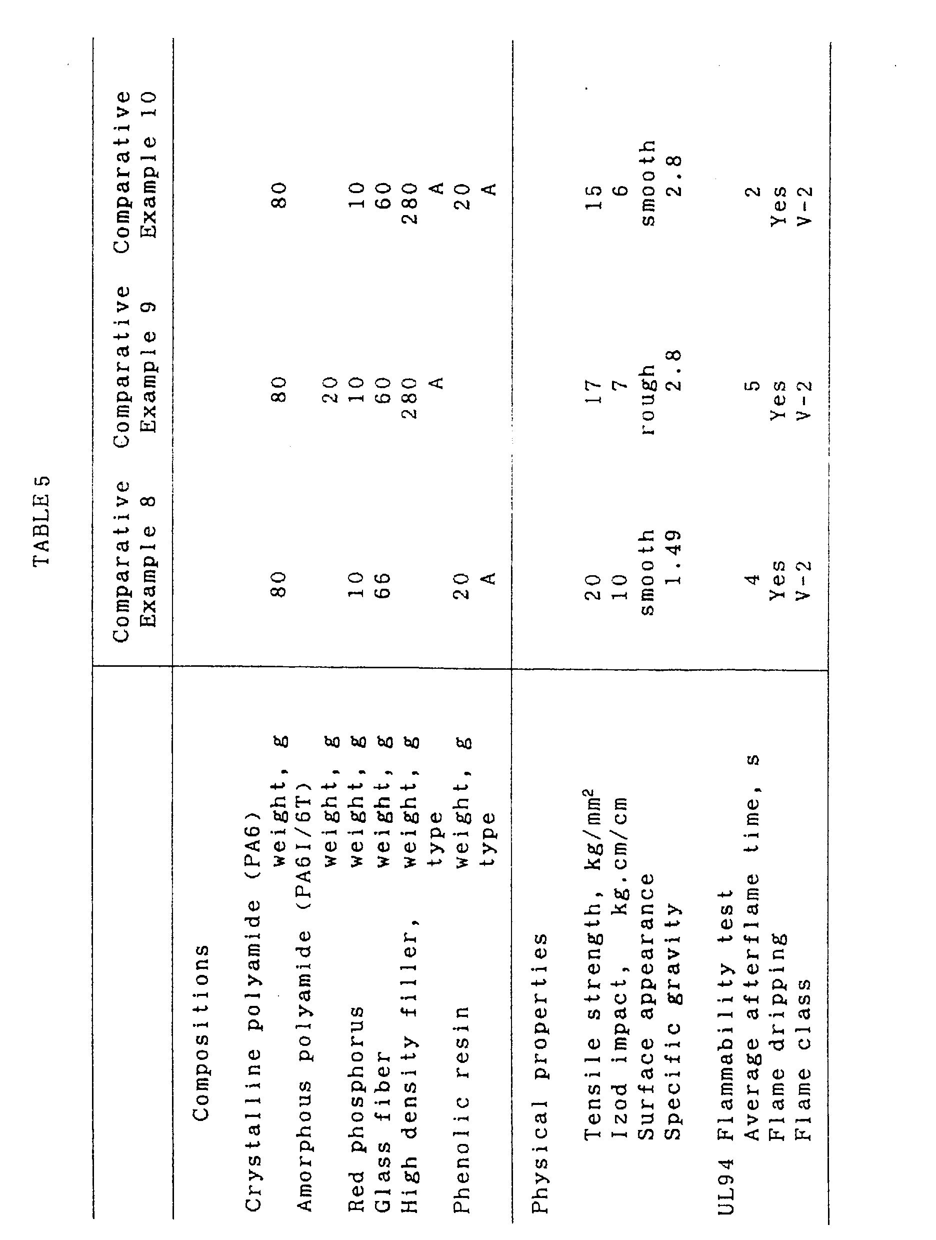

## Claims

1. Non-dripping flame retardant polyamide composition comprising 100 weight parts of the mixture of 60-90 weight parts of aliphatic crystalline polyamide, 5-20 weight parts of semi-aromatic amorphous polyamide, 5-20 weight parts of phenolic resin, 5-15 weight parts of red phosphorus, 0-100 weight parts of glass fiber, 0-400 weight parts of high density filler.

2. Non-dripping flame retardant polyamide composition as described in Claim 1 wherein high density filler is iron powder, iron oxide powder, ferrite, magnetite.

3. Non-dripping flame retardant polyamide composition as described in Claim 1 wherein high density filler is glassy powder comprising 80 % or more of lead monoxide (PbO).

## Patentansprüche

1. Nichttropfende flammhemmende Polyamidzusammensetzung, die umfaßt: 100 Gewichtsteile einer Mischung von 60 - 90 Gewichtsteilen eines aliphatischen kristallinen Polyamids, 5 - 20 Gewichtsteilen eines semi-aromatischen amorphen Polyamids, 5 - 20 Gewichtsteilen eines Phenolharzes, 5-15 Gewichtsteilen roter Phosphor, 0 - 100 Gewichtsteilen Glasfasern, 0 - 400 Gewichtsteilen eines Füllstoffes mit hoher Dichte.

2. Nichttropfende flammhemmende Polyamidzusammensetzung nach Anspruch 1, worin der Füllstoff mit hoher Dichte Eisenpulver, Eisenoxidpulver, Ferrit, Magnetit ist.

3. Nichttropfende flammhemmende Polyamidzusammensetzung nach Anspruch 1, worin der Füllstoff mit hoher Dichte Glaspulver ist, das 80 % oder mehr Bleimonooxid (Pb0) umfaßt.

## Revendications

1. Composition de polyamide ignifuge sans égouttement comprenant 100 parties en poids du mélange de 60-90 parties en poids de polyamide cristallin aliphatique, 5-20 parties en poids de polyamide amorphe semi-aromatique, 5-20 parties en poids de résine phénolique, 5-15 parties en poids de phosphore rouge, 0-100 parties en poids de fibres de verre, 0-400 parties en poids de charge à haute densité.

2. Composition de polyamide ignifuge sans égouttement telle que décrite dans la revendication 1, dans laquelle la charge à haute densité est la poudre de fer, la poudre d'oxyde de fer, la ferrite, la magnétite.

3. Composition de polyamide ignifuge sans égouttement telle que décrite dans la revendication 1, dans laquelle la charge à haute densité est une poudre vitreuse constituée de 80% ou plus de monoxyde de plomb (PbO).
